# EUROPEAN PATENT APPLICATION

(11) **EP 1 707 287 A1**
(43) Date of publication of application: **04.10.2006**
(21) Application number: 04704710.5
(22) Date of filing: 23.01.2004
(51) Int. Cl.: B22C 7/02, B22C 9/04, B22C 9/10, B29C 39/08

(54) **PROCESS FOR PRODUCING RESIN MODEL AND PROCESS OF LOST WAX PRECISION CASTING WITH THE RESIN MODEL**

(71) Applicant: Shonan Design Co., Ltd., Sagamihara-shi, Kanagawa-ken 2291132 (JP)
(72) Inventor: SUZUKI, Hidekazu, Shonan Design Co., Ltd., Kanagawa 229-1132 (JP); SAITO, Akio, Shonan Design Co., Ltd., Kanagawa 229-1132 (JP); KITA, Taro, Shona Design Co., Ltd., Kanagawa 229-1132 (JP)
(74) Representative: Gesthuysen, von Rohr & Eggert
(86) International application number: PCT/JP2004/000597
(87) International publication number: WO 2005/070588

(57) **Abstract**

A process for producing a resin model for use in lost wax precious casting, comprising at least a hardened resin layer forming step of injecting two-pack reaction hardening type urethane resin solution (A) of 1 to 3 minutes of a working life, through a casting port (4) of a resin model forming mold (2) furnished with internal space (3) whose configuration is identical with that of product, into the internal space (3) in a volume amounting to 5 to 20 % of the volume of the internal space (3), closing the casting port (4) and rotating the resin model forming mold (2); a resin model forming step of repeating the hardened resin layer forming step 3 to 6 times at intervals of 3 to 4 minutes so as to effect laminating of hardened resin layers (11), thereby obtaining resin model (12) having internal space (30) provided at a core region thereof; and a demolding the resin model (12) from the resin model forming mold (2).

## Description

### TECHNICAL FIELD

The present invention relates to a process for producing a resin model used for instance in a precious casting by a lost wax method.

### BACKGROUND OF THE INVENTION

A method of a lost wax precision casting as background arts as a whole is explained as follows. A method for a lost wax is to go through production processes such that a wax model which is the same shape as casting products is produced by injecting a melted wax component into a metal mold for mass production of wax models and removing it from the metal mold after cooling, a hollowed mold is produced by providing a refractory on the surface of the wax model and heating it to melt the wax model and make it flow out, and further burning out it completely at high temperature, and a product is produced by injecting a melted metal alloy into the mold and taking it out by breaking the mold after cooling and hardening.

In addition, in the process that the wax model is produced by injecting a wax component into the metal mold, regular quantity of the wax models are produced by controlling injection temperature, injection pressure, holding time for injection pressure, and cooling temperature for removing the mold. The wax models produced in thus way are kept in a content temperature room to pay attention so as to maintain the dimensional accuracy as well as possible. In assembly of the wax model, sprue models produced separately are assembled to the wax model integrally in a state like a tree. A whole of the assembled model is called "Tree". Because a shape of the tree is a design for a sprue system by itself, it is designed by considering many factors such as a characteristic of melted metal, a size and a shape of a casting, casting conditions, cutting from the tree, etc.

The tree produced in thus way is coated in layers by soaking it in coating slurry and drying it repeatedly. A binder used in the coating slurry is colloidal silica, ethyl silicate, hybrid, etc. The slurry is made by mixing refractory impalpable powder as filler into the binder. Concretely, after the tree is soaked in the slurry produced in thus way, stucco grains are sprinkled on the tree, and the tree is dried. Zircon sand and molochite grain are used as the stucco grains. The coating process is completed by repeating these steps several times.

Next, the wax model is melted in an autoclave at 120 to 150 °C to flow out of the mold. This is called "dewaxing". A shell mold resulting from the dewaxing step is burned in a high-temperature furnace at 700 to 1000 °C in which the temperature is increased step by step in order to remove residual wax and unburned carbon particles and increase strength of the mold. Melted alloy is cast into the casting mold produced in thus way, the casting mold is split away with a knockout machine after the alloy becomes cooled, Then, a casting is taken out, and runners and weirs and the like are cut away and removed from the casting. Newt, residual refractory material attached of the casting is eliminated by blasting. In addition, any repairable portions of it are repaired by welding, a surface of it is finished by a grinder, and a casting alloy product is completed by a heat treatment.

The model used in the lost wax precious casting must be melt by heat, decomposed or removed by burning at the process for producing the mold as an indispensable condition. In a prior art, a wax component is used generally and widely as a model material because it is easily melt by heat, decomposed and removed by burning. Hereinafter, the prior art such that a hollow model is formed with synthetic resin which is worse in a nature such as being melt by heat, decomposed and removed by burning than waxes, but better in model strength to be adapted in a mode easy to be melt by heat, decomposed or removed by burning is explained.

There are various methods for manufacturing a configuration having a hollow part. Ancient people formed pots as pot-shaped hollow integral moldings by piling up or winding up a string-shaped clay like a snake's coil continuously. Besides, at present, a clay block put on a rotation plate is pulled up with constant thickness to produce a pot with a hollow portion. These methods are applied to a symmetrical simple circular molding.

In a field of glass craft articles, under a high temperature condition for holding a melted state, a melted glass material is got on a top of a blowing pipe, foamed like a balloon by pouring air into it from the end of the blowing pipe, a hollow glass craft article is produced by rotating the blowing pipe and forming an outside appearance of the melted glass material three-dimensionally. In manufacturing, under a high temperature condition for holding a melted state, a melted glass material is got on a top of a blowing pipe, entered into a segment die, foamed like a balloon by pouring air into it from the end of the blowing pipe, and pressed to a side surface of the segment die by air pressure, resulting that decrease of the temperature of the melted glass material is promoted, rapidly changing to a condition such as to lose flowability and maintain a set-up shape, separating the segment die and taking out a hollow molding. Currently, thus method is achieved by an automatic successive manufacturing, so that the same shaped hollow glass productions are mass produced.

In a plastic field, there is a method such that: a blow forming that air is poured into a thermoplastic sheet cylinder softened by heat to stick the thermoplastic sheet cylinder to an inner surface of a segment die and cool down it to be set, and then the segment die is separated to take out a hollow molding is industrialized, calling it a blow molding.

Besides, hollow moldings are formed by that: thermoplastic resin powder is poured from an opening of a heating die into the die, increasing temperature of the die to melt the thermoplastic resin powder contacting to an inner surface of the die to form a thermoplastic resin layer, cooling down the die and the thermoplastic resin layer stuck to the inner surface of the die to maintain its shape, removing the remaining non-melted thermoplastic resin power from the opening of the die, taking out the thermoplastic resin sheet from the opening of the die, expanding the resin sheet taken out by air pressure. For instance, character's masks as thus hollow moldings can be seamlessly formed by painting them. This is a slush molding. This is a method that a property such as to be elastically restored to an original shape after taking out from the opening of the die by folding it because the formed thermoplastic resin has rubber elasticity is used well.

Furthermore, there is a rotation molding method such that: a little quantity of two-pack reaction type resin is injected into a mold, stuck around an inner surface of the mold with rotating and hardened to be like a shell, and then a hollow model is taken out by demolding. The present invention is achieved by finding a large effect according to manufacturing a hollow model by a special resin composition by using the rotation molding method and adopting it in a limited usage as a model for a lost wax precious casting.

Besides, an optical molding method is a method so as to emit light to photo-setting type resin in order to harden and laminate them in a doughnut disc shape, so that a three-dimensional model is gained by changing the doughnut disc shape in turn by controlling the light by a computer. Hollow parts of the doughnut discs form a hollow part of the three-dimensional model, so that it is an excellent method for manufacturing an integral molding with a hollow part. However, this method is a very powerful method for manufacturing only one model, but it would not be suitable to plurality or mass production because many hours are necessary to manufacture a 1ot of models. Thus, the above methods are to form a model with a hollow part integrally, but every method has its merits and demerits in a formable shape, in a material of casting, in mass production or in an economical condition.

Furthermore, there is a method for manufacturing that a molding in which a removable core is buried is manufactured and then the core is dissolved with an organic solvent or water in order to make a hollow part.

Prior arts that the hollow resin model is adapted to a resin model for the lost wax precious casting are listed up as follows. Examples that a hollow resin model is formed with photo-setting type resin by an optical molding and it is adapted to the lost wax precious casting are disclosed in JP 9-52145 A, JP 2001-18033 A, JP 2000-5843, JP 11-57943, etc. An example that foamed urethane resin model which can be regarded as a kind of a hollow matter is adapted to the lost wax precious casting is disclosed in JP 2000-210755A. This is that a heat-curing polyurethane foamed model for reactive injection casting is manufactured, a shell mold is formed around the model, the model is removed by burning in heating process, the shell mold is cured, and melted metal or melted alloy is molded.

The present invention is to propose the precious molding by using the lost wax method in which foamed or non-foamed hollow urethane resin model is used instead of a wax model is formed with a special urethane resin liquid which includes a plasticizer or a wax component as an indispensable component by a rotation casting, and is different from the above mentioned prior arts basically.

In the case of producing a precious molding by the lost wax method, a model is generally a wax model consisting of a wax component. This is a reason why the wax component is melted and flown out easily at high temperature and is superior in a burning performance in a mold high temperature burning process. However, the precious molding has a complex construction recently, and further severe dimensional accuracy is required. Various problems are arisen as thus requirement and any problems can not be corresponded in the prior wax model presently.

Namely, the problems regarding to the wax models are that edge portions are not formed accurately, that narrow ribs are formed difficultly, and that the narrow ribs are easy to be broken. Accordingly, thin portions must be removed more carefully at a demolding process, and there is technical limitation for manufacturing in the wax models with a thinner portion less than 1mm. The produced wax models have some problems such that they are fragile because hardness of surfaces thereof is lower, that dimensional accuracy thereof is not enough and that it is easy for them to be damaged by drop impact at carriage, and further have a problem such that they must be preserved in a constant temperature room because the produced wax models are deformed easily in a summer condition. Moreover, there is a problem such as to pay close attention when the wax models are carried in summer. These result from softening at approximately 80 °C because the wax component is a relative low-molecular organic matter. Thus, problems for the wax model are caused mainly by problems of the wax components. Though development work for changing composition of the wax component is carried out in order to solve the problems caused by thus wax component, the problems are not solved fundamentally because the wax component is a low melting point organic matter which is melted at temperature little higher than a normal temperature and it is in crystallization or solidification at the normal temperature, recently.

Generally, a wax component of the wax model used in the lost wax precious casting is a compound of paraffin, rosin, carnauba wax and terephthalic acid. The wax component is described in detail in a casting handbook (edited by Nippon Casting Association). JP 5-38549 A discloses that availability can be increased by mixing melamine powder with the wax component in order to improve the wax component. However, as long as the wax component is melted at high temperature and has a property that the wax is removed easily, even if the polymeric melamine powder is applied, it is difficult to increase mechanical solid state properties of the wax model. In the case of a complex shaped model with thickness of not more than 1 mm, problems such that it can not avoid the problems due to basic properties of the wax such that the model is bent, broken or deformed at demolding of the wax model are remained.

Accordingly, the present invention provides a process for producing a resin model for use in lost wax precious casting and a process for lost wax precious casting in order to solve the above mentioned problems caused by the wax model.

### DISCLOSURE OF THE INVENTION

Therefore, the present invention is applied to a process for producing a resin model used in precious casting by a lost wax method and a process for lost wax precious casting and is provided with at least a hardened resin layer forming step of injecting two-pack reaction hardening type urethane resin solution (A) with a working life of 1 to 3 minutes through a casting port of a mold for resin model formation defining an internal space whose configuration is identical with that of a product into the internal space in a volume amounting to 5% to 20% of the volume of the internal space, closing the casting port and rotating the mold for resin model formation, so that a hardened layer of the two-pack reaction hardening type urethane resin solution is formed on an inside wall of the mold for resin model formation; a resin model forming step of repeating the hardened resin layer forming step 3 to six times at intervals of 3 to 5 minutes to effect laminating of hardened resin layers, thereby obtaining a resin model having internal space at a core region thereof; and demolding step of demolding the resin model from the mold for resin model formation.

Besides, the two-pack reaction hardening type urethane resin solution (A) preferably comprises multifunctional polyol component (a), multifunctional polyisocyanate component (b) and a plasticizer component (c), and an average functional group of the multifunctional polyol component (a) is 2.8 or larger, an average functional group of the multifunctional polyisocyanate component (b) is 2.0 or larger, and a ratio NCO/OH is within 0.7 to 1.0, and further the plasticizer component (c) is preferably micro-dispersed through phase separation at the reaction hardening.

Moreover, the two-pack reaction hardening type urethane resin solution (A) preferably contains polyether chains having a chemical structure indicated in the chemical structural formula as follows at 2- 25 wt% thereof.

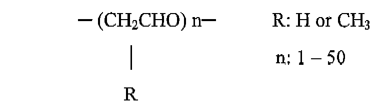

In addition, a fine wax component (d) is preferably contained within 5 to 40 wt% in the two-pack reaction hardening type urethane resin solution (A).

Furthermore, it is preferred that small quantity of water (e) is added to the two-pack reaction hardening type urethane resin solution (A) to become water-foamed urethane.

Moreover, it is preferred that the resin model has an internal hollow space whose volume is in the range from 20% to 70% thereof. It is better that the internal hollow space is filled with the wax component (d) or foamed urethane.

It is desired that the above mentioned resin model is used in a precious casting by a lost wax method, and it is better that a precious casting product is produced by the precious casting process.

### BRIEF EXPLANATION OF THE DRAWINGS

Fig. 1 is a perspective view showing one embodiment of a resin model according to a working mode of the present invention;
Fig. 2 is a cross section diagram showing one example of a process in which two-pack reaction hardening type urethane resin solution is injected into a mold in a process for producing a resin model according to a first embodiment of the present invention;
Fig. 3 is a cross section diagram for illustrating the first hardened resin forming step in a process for producing a resin model according to a first embodiment of the present invention;
Fig. 4 is a cross section diagram for illustrating a resin model forming step in a process for producing a resin model according to a first embodiment of the present invention;
Fig. 5 is a cross section diagram for illustrating a resin model forming step in a process for producing a resin model according to a second embodiment of the present invention; and
Fig. 6 is a cross section diagram for illustrating a resin model forming step in a process for producing a resin model according to a third embodiment of the present invention.

### BEST MODE FOR CARRYING OUT THE INVENTION

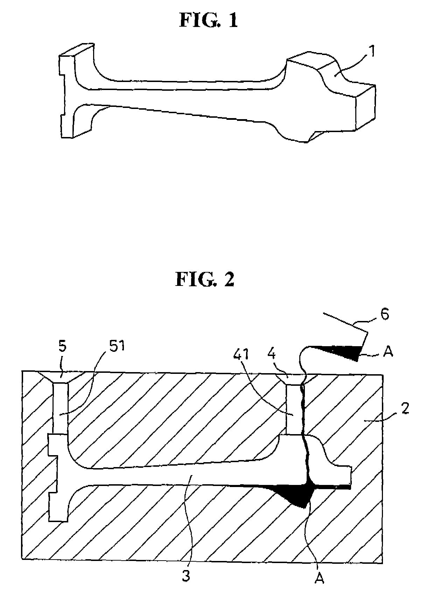

Fig. 1 is a perspective view showing one embodiment of a resin model 1 according to a working mode of the present invention. Hereinafter, a process for producing the resin model 1 is explained by referring the drawings.

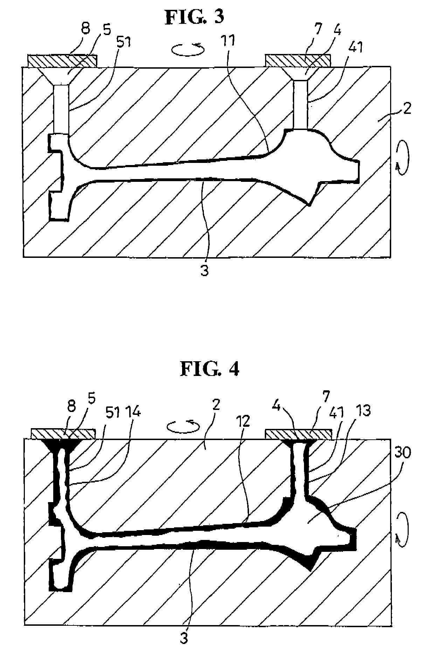

In a first embodiment, as shown in Fig. 2, a mold 2 for resin model formation (hereinafter, the mold 2) is a silicon rubber mold formed with a silicon rubber and has an internal space 3 which has the same shape as the resin model 1, a casting port 4 opening to an outside and an air bleeder 5, further having a casting port passage 41 communicating between the casting port 4 and the internal space 3 and an air bleeder passage 51 communicating between the air bleeder 5 and the internal space 3.

Two-pack reaction hardening type urethane resin solution (A) as described below which is injected into the internal space 3 is mixed in a mix container 6 and the mixed solution of 5 to 20 % in a basic of a volume of the internal space 3 is injected into the internal space as a first time. Then, as shown in Fig. 2, the casting port 4 and the air bleeder 4 is closed by sealing member 7, 8 such as a sealing tape. The mold 2 is installed on a rotational casting machine not shown in figures and rotated in multi-directions during 1 to 3 minutes, so that the two-pack reaction hardening type urethane resin solution (A) is stuck on an inner wall of the mold 2 to form an urethane resin layer 11 (a hardened resin layer forming step). The above mentioned operation is repeated several times to laminate the urethane resin layers 11 (a step of laminating layers), so that a resin model 12 with a specific thickness as shown in Fig. 4 (a step of forming a resin model). The resin model 12 is constituted of a part which becomes a finished resin model 1, a part of the casting port passage 13 formed around the casting port passage 14 and a part of the air bleeder passage 14 formed around the air bleeder passage 51, and is remolded from the mold 2 (a step of remolding). Then, the part of the casting port passage 13 and the part of the air bleeder passage 14 are cut off from the resin model 12, so that the finished resin model 1 is gained (a step of finishing).

In this embodiment, the above mentioned operation is performed three times. This is a reason why inconvenience is happened because the layer can not cover the whole inner wall of the mold completely and it results the model including any lack portion in the case of performing the step of laminating layer once or twice. Besides, this is a reason why it is difficult to manufacture the model rapidly because the operation time or man hours is increased in the case of performing the step of laminating layers seven times or more. In our experiment, it is clear that the inner wall of the mold can be covered with the resin layers completely by performing the usual step of laminating layers three times to six times. Accordingly the step of laminating layers is preferably performed three times or four times.

It is desired that a quantity of the two-pack reaction hardening type urethane resin solution (A) injected into the mold 2 is set by what percents are determined to a whole volume of the resin model 1. it was clear in our experiment that the quantity of the two-pack reaction hardening type urethane resin solution (A) used in usual one injection is preferably a quantity of 5to 20 % to the whole volume of the resin model. In the case that the quantity of the two-pack reaction hardening type urethane resin solution (A) used in one injection is less than 5 % to the whole volume of the resin model, because it is difficult to cover the inner wall of the mold completely in three times to six times of the step of laminating layers, and it is necessary to perform the step of laminating layers not less than seven times, rapid resin model manufacturing is failed. In other words, in the case that the quantity of the two-pack reaction hardening type urethane resin solution (A) used in one injection is not less than 20 % to the whole volume of the resin model, though the inner wall of the mold 2 is covered completely by performing the step of laminating layers three or four times, a hollow part of the resin model I is decreased and a hollow model including a hollow part whose volume is not less than 40 % can not be produced, it results that the mold is broken easily by a load in a demolding or burning process.

The resin model 1 produced thus has a hollow parts whose volume is 20 % to 60 % in the volume of the resin model itself. This is to decrease the load in the demolding or burning process largely, so that large effectivity is exhibited to breaking of the mold.

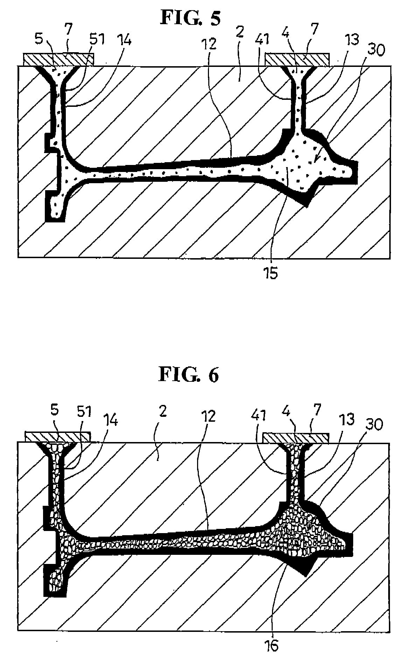

In order to decrease the load in the demolding or burning process largely, thickness of the resin model should be reduced extremely. For the shake of it, thickness of the laminating layer laminated once must be thinner than limitation of the present invention and the number of times of performing the step of laminating layers must be increased. However, as described above, the number of processes for producing a resin model is increased while the working life is increased, so that short time delivery and inexpensive production are not achieved. Therefore, a second embodiment is, as shown in Fig. 5, shows a method that the number of laminating layers is twice to form a resin layer incompletely on the inner wall of the mold 2, then a melted wax component 15 is poured into a hollow portion 30 of the resin model 1 through the casting port 4 without demolding of the resin model 12, then it is cooled at a normal temperature, and then it is demolded. Namely, the wax component 15 filled up in the hollow portion 30 is effective means for reinforcing the resin model 1 in every process until producing the mold and maintaining strength as a model.

Similarly, a third embodiment, in order to decrease the load in the demolding or burning process largely, shows a method that the number of laminating layers is twice to form the resin layer incompletely on the inner wall of the mold 2, then foamed urethane resin solution 16 is poured into the hollow space 30 through the casting port 4, then the hollow space 30 is filled with foamed urethane resin, and then the resin model is demolded. Namely, the foamed urethane resin filled up in the hollow portion 30 is effective means for reinforcing the resin model 1 in every process until producing the mold and maintaining strength as a model.

Note that the same parts and the similar parts are marked with the same marks or symbols in Figs. 5 and 6 showing the second and the third embodiments mentioned above in order to omit the explanation thereof.

Next, component substances of the two-pack reaction hardening type urethane resin solution (A) used in the present invention is explained.

A framework of the two-pack reaction hardening type urethane resin solution (A) is constituted of the multifunctional polyol component (a) and the multifunctional polyisocyanate component (b), chemical reaction is started by mixing two components, so that it is heated and hardened. The plasticizer (c) and the wax component (d) may be mixed into either the multifunctional polyol component (a) or the multifunctional isocyanate component (b), or may be mixed into both of them. Besides, a water component (e) is mixed into the multifunctional polyol component (a) in advance because the water component is reacted with the multifunctional isocyanate component (b).

Next, every component is explained. The multifunctional polyol component (a) may be a low molecular polyol, a polyether polyol, an amine polyol, polyester polyol, an acrylic polyol, or a polybutadiene polyol and so on. Castor oil and its derivatives may be used as a special.

Ethylene glycol, propylene glycol, 1-4 butanediol, glycerine, trimethylolpropane, pentaerythritol, etc. is mentioned as the low molecular polyol.

The polyether polyol may be a polyether polyol, etc. with various molecular weights obtained by adding ethylene oxide or propylene oxide into the low molecular polyol. Hydroxyl group terminal may be primary or secondary by various blending systems such as addition by only ethylene oxide, additional by only propylene oxide, addition by mixture, addition in sequence, etc. Various types of polyether polyol with ethylene oxide and propylene oxide rendering diverse hydrophilic or hydrophobic properties in their additional chains can be achieved by varying reactivity of the hydroxyl group terminal through different blending methods. Besides, polytetramethylene ether glycol obtained through cationic polymerization of THF, which is often referred to as PTMG, may be used.

The amine polyol is a substance achieved by adding ethylene oxide or propylene oxide to a low molecular amine such as ammonia, ethylene diamine, or polyethylene polyamine. Thus, the amine polyol, which contains tertiary nitrogen within its molecule, is a polyol retaining an effect of promoting reaction of isocyanate. The amine polyol containing ammonia as a starter is trifunctional, the amine polyol containing the ethylene diamine as a starter is quadrafunctional and the amine polyol containing polyethylene polyamine as a starter is multifunctional more than four functions. These are components indispensable to the present invention in which rapid hardening is performed.

The polyester polyol may be condensed polyester polyol having a hydroxyl group constituting a molecular terminal achieved by esterifying a dibasic acid and a low molecular polyol. By selecting specific types of dibasic acid and low molecular diol/triol, adjusting the molecular weight and using a small quantity of a multifunctional low molecular polyol, diverse types of polyester polyol can be prepared. The dibasic acid which is often used to prepare a condensed polyester polyol is adipic acid. The low molecular diol may be ethylene glycol, propylene glycol, 1-4 butanediol or the like, whereas the low molecular triol may be glycerine, trimethylolpropane, or glycerin or trimethylolpropane containing small quantity of alkylene oxide. In addition, the functional group and the molecular weight of a ε-caprolactam ring-opening polymerization type polyester polyol can be adjusted by controlling the ring-opening polymerization starter type and the quantity of the starter used for the ring-opening polymerization. There are matters having polyester chains and polyether chains by adding alkylene oxide to them, or there are also matters having much variety. Besides, there is also a carbonate diol obtained by opening the ring of ethylene carbonate.

The acrylic polyol is that an acrylic monomer containing a hydroxyl group terminal is polymerized in methyl acrylate or methyl meta-acrylate, and is an acrylic oligomer having a plurality of hydroxyl groups in an acrylic chain. Various kinds of acrylic polyol formed by selecting specific kinds of acrylic monomer and adjusting their molecular weight are marketed. A liquid resin whose polymerization degree is increased to the level at which film formation is enabled to have a high molecular weight and which is dissolved in an organic solvent is a paint with superior weather resistance due to slight cross-linking induced by aliphatic polyisocyanate.

The polybutadiene polyol is a copolymer consisting of butadiene containing a hydroxyl group at a terminal thereof and a compound having double bonds. It is a polyol with a relatively high level of hydrophobic property.

A urethane modified polyol with a hydroxyl group terminal obtained by joining thus multifunctional polyol via polyisocyanate may be used as well. In such a case, viscosity tends to increase since the molecular weight increases slightly due to oligomerization resulting from the urethane modification.

One of the multifunctional polyols listed above may be used by itself, or two or more multifunctional polyols may be used in combination. Under normal circumstances, the molecular structure is designed by blending various kinds of multifunctional polyol constituents in specific quantities in order to satisfy numerous requirements corresponding to a given purpose of use. Such a multifunctional polyol component (a) includes an active hydroxyl group at a molecular terminal and its reactivity with isocyanate is different by the kind of hydroxyl group at the molecular terminal.

In particular, polyether polyols and polyester polyols have high levels of affinity with water and also contain minute quantities of water. Such extremely low water contents do not cause any concern as long as the polyols are used in aqueous foamed urethane. However, if they are used in non-foamed urethane, it is necessary to rigorously carry out reduction control of the minute quantities of water. For this reason, the multifunctional polyol component (a) is manufactured through heating, mixing and dehydrating progresses.

The multifunctional polyisocyanate component (b) is a compound containing two or more isocyanate groups in a single molecule thereof, and the multifunctional polyol component (a) is to contain two or more a hydroxyl groups in a single molecule thereof. The isocyanate groups are functional groups with an extremely high level of reactivity, and react with hydroxyl groups containing active hydrogen, amino groups or thiol groups. Since the amino groups or the thiol groups react instantaneously, they are limitedly applied to less reactive isocyanate components or less reactive aromatic amines, but they still react fairly quickly, so that such a combination is not commonly used.

The polyisocyanate component (b) may be an aromatic polyisocyanate, an aliphatic polyisocyanate, or an alicyclic isocyanate. Typical examples of the aromatic polyisocyanate include tolylene diisocyanate and diphenylmethane diisocyanate. The tolylene diisocyanate is obtained as a mixture of various isomers in chemical reaction at production, and various industrial products with varying mixing ratios of 2,4-body and 2,6-body, e.g., TDI-100 (2,4-TDI 100%), TDI-80 (2,4-TDI 80%, 2,6-TDI 20%), TDI-65 (2,4-TDI 65%, 2,6-TDI 35%), are marketed. The diphenylmethane diisocyanate is obtained as a mixture of various isomers in chemical reaction at production, being pure MDI and polymeric MDI in industrial applications. The pure MDI is a dicaryonic, whereas polymeric MDI is a multicaryonic. While the pure MDI is insolated through distillation, the polymeric MDI is obtained as residue. Since the number of muticaryons in the polymeric MDI changes under different manufacturing conditions, various types of polymeric MDI are marketed from numerous manufacturers. In addition, other examples of the aromatic polyisocyanate include naphthalene diisocyanate that an isocyanate group is added to a naphthalene nucleus or tolidine diisocyanate. Examples of the aliphatic polyisocyanate include hexamethylene diisocyanate, isophorone diisocyanate, xylylene diisocyanate, and lysine diisocyanate. The alicyclic polyisocyanate may be hydrogenated xylylene diisocyanate obtained by hydrogenating xylylene diisocyanate, or hydrogenated MDI obtained by hydrogenating MDI.

Because the polyisocyanate is generally highly reactive and especially volatile polyisocyanate is highly toxic, they are normally used after undergoing various types of metamorphisms. Such a metamorphism may be urethane modification, dimerization, trimerization, polycarbonimidization, urea modification, pre-polymerization, blocking and so on. These are to leave an isocyanate group at a terminal thereof by inducing self condensation by using higher reactivity of the isocyanate group or by joining it via an active component.

Hereinafter, a specific extent of the present invention about the two-pack reaction hardening type urethane resin solution (A) having the multifunctional polyol component (a) and the multifunctional polyisocyanate component (b) as resin constituents is explained.

The two-pack reaction hardening type urethane resin solution (A) containing the multifunctional polyol component (a) and the multifunctional polyisocyanate component (b) as resin constituents contains 2 to 20 wt% of polyether chains, as indicated in the chemical structure formula presented below.

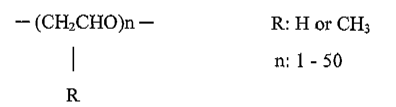

Polyether chains will be introduced by using polyether to constitute the multifunctional polyol component (a). Alternatively, they may be introduced via a polyether ester if a polyester polyol is used. Otherwise, polyether chains may be introduced by way of a so-called quasi-prepolymer, with a terminal isocyanate joined with a polyether, which can be used as a multifunctional polyisocyanate component (b). The polyether chains constitute the soft component of the urethane resin, and polyether chains derived from propylene oxide, in particular, are extremely soft. When such extremely soft polyether chains are heated to high temperature during the dewaxing and burning processes, they become thermally decomposed and the thermally decomposed polyether chains become liquefied, flow out and burn off readily. The present invention takes full advantage of these characteristics by ensuring that the liquid resin according to the present invention contains 2 to 25 wt% of polyether chains. The full effect of the polyether chains does not manifest if the polyether chain content is less than 2 wt%. Once the polyether chain content exceeds 20 wt%, the ratio of the soft component becomes too high and, as a result, the hardened object becomes softened, making it difficult to keep the level of hardness required of the model. For this reason, the more desirable polyether chain content is 5 to 20 wt%.

The multifunctional polyol component (a) and the multifunctional polyisocyanate component (b) are blended in quantities determined by calculating the NCO radix and the OH radix and setting the NCO/OH ratio of the NCO radix and the OH radix to a value close to 1.0 in the case of non-foam urethane. The NCO/OH ratio of the multifunctional polyol component (a) and the multifunctional polyisocyanate component (b) to constitute urethane foam is set to 1.0 to 1.1, i.e., in a range where the NCO value is larger than the OH value. When NCO/OH = 1.0, the numbers of the isocyanate groups and the hydroxyl groups are equal to each other and at this setting, the reaction ends when both types of groups are all used in the reaction. In other words, it is a setting at which the maximum strength is realized. According to the present invention, NCO/OH is set to a range of 0.7 to 1.0, i.e., in a range where the NCO value is smaller than the OH value. Under normal circumstances, urethane molecules are not designed in such an NCO-short range. The molecular design in this unusual NCO/OH range is enabled according to the present invention, since the multifunctional polyisocyanate component with an average functional radix 2.1 or greater and the multifunctional polyol component with an average functional radix of 3.0 or greater are used and, as a result, a three-dimensional network structure is achieved even in the range over which the value of NCO/OH is 1.0 or less. While there are more OH groups than NCO groups in this state, multifunctional monomers are used and, for this reason, the monomers become completely linked to constitute a principal chain without the functional groups achieving complete reaction. The excess OH groups are retained in the principle chains when the reaction ends. This is considered to help sustain a high level of hydrophilic property, which facilitates micro dispersion of the highly hydrophobic plasticizer through phase separation.

For the reasons discussed above, NCO/OH is set to 0.7 to 1.0 and more desirably to 0.8 to 0.9. Once the NCO/OH ratio becomes equal to or less than 0.7, the number of isocyanate groups relative to the number of hydroxyl groups becomes too small and, as a result, a three-dimensional network structure cannot be achieved in the reactively set resin compound, which leads to a major reduction in the hardness and ultimately the resin becomes too soft to retain the original shape. If, on the other hand, the NCO/OH ratio is equal to or greater than 1.0, the number of excess isocyanate groups becomes too large and too many isocyanate groups will be left unused in the reaction when the resin needs to be disengaged from the die. This may lead to undesirable results such as failure to achieve a specific level of hardness and inconsistent color at the surface of the hardened object.

As a catalyst that promotes the chemical reaction of the multifunctional polyol component (a) and the multifunctional polyisocyanate component (b), a metal catalyst or an amine catalyst may be used. Examples of a metal catalyst that may be used include octylic zinc, octylic lead, dibutyltin denatured, dibutyltin diacetate and the like. Examples of an amine catalyst that may be used include triethylene diamine, NN-dimethyl piperazine, N-methyl morpholine and the like. The catalyst is normally added into the polyol component. Under normal circumstances, the multifunctional polyol component (a) contains 1 to 1000 ppm of catalyst and the working life is thus adjusted. According to the present invention, the catalyst is added in the multifunctional polyol component (a) so has to set the length of time over which work is enabled, i.e., the working life, to 5 minutes or less. If the working life is set to 5 minutes or more, the setting-disengaging time exceeds five hours, which may become problematic for resin model production. If the working life is less than 1 minute, the reaction viscosity rises quickly, making it difficult to secure a sufficient length of time for the double fluid mixing and casting processes. For these reasons, the working life should be set to 1 to 2 minutes.

Next, the plasticizer (c) used in the present invention is explained. The plasticizer (c) used in the present invention is an inactive chemical compound having no functional group that induces a chemical reaction with volatility insignificant enough to be disregarded. The plasticizer (c) may be an ester plasticizer, an ether plasticizer or an ester/ether plasticizer. More specifically, typical examples of the ester plasticizer are dioctyl adipate (DOA), dioctyl phthalate (DOP) and dibutyl phthalate (DBP). Alternatively, benzyl acetate, benzoic butyl, benzoic octyl, benzoic isopentyl, ethylene glycol benzoic diester, polyethylene glycol benzoic diester, propylene glycol benzoic diester, poly propylene glycol benzoic diester, ethylene glycol dioleate, polyethylene glycol dioleate, propylene glycol dioleate and polypropylene glycol dioleate. Examples of the ether plasticizer include ethylene glycol dibutyl ether, ethylene glycol diphenyl ether, diethylene glycol diethyl ether, diethylene glycol methyl ethyl ether, diethylene glycol diethyl ether, diethylene glycol ethyl butyl ether, diethylene glycol dibutyl ether, triethylene glycol diethyl ether, triethylene glycol diethyl ether, triethylene glycol diethyl ether, triethylene glycol dibutyl ether, tetraethylene glycol diethyl ether, tetraethylene glycol diethyl ether and the like. Examples of the ethyl/ester plasticizer include ethylene glycol monobutyl ether acetate, diethylene glycol monoethyl ether acetate, diethylene glycol monobutyl ether acetate, diethylene glycol mono phenyl ether acetate and the like.

The plasticizer (c) is used in a quantity that amounts to 2 to 20wt% relative to the entire weight of the two-pack reaction hardening type urethane resin solution (A). If the content of the plasticizer (c) exceeds 20 wt%, the plasticizer (c) bleeds over the surface of the resin model readily to cause stickiness. If, on the other hand, the plasticizer (c) is used in a quantity amounting to less than 2wt% the thermally decomposed and melted resin does not flow out readily during the dewaxing/burning processes since the plasticizer (c), which is a highly viscous liquid at room temperature but has a lower level of viscosity at higher temperatures, is not contained in sufficient quantity. While it is desirable to take full advantage of these characteristics of the plasticizer by using a greater quantity of the plasticizer (c), an excessively high plasticizer content in the resin results in bleeding of the plasticizer over the surface of the hardened object and the surface becomes tacky and sticky, as described earlier. Accordingly, it was found that a maximum content for the plasticizer (c) can be achieved by rapidly setting the resin within less than 5 minutes of working life and trapping the plasticizer (c) having undergone phase separation from the cured resin in the three-dimensional network structure of the cured resin in a state of micro dispersion.

Such phase separation micro dispersion can be regarded as a state in which the plasticizer (c) is enclosed by the cured resin assuming a honeycomb structure. The cured resin assuming the honeycomb structure has superior physical strength, and the honeycomb structure can also be regarded as a three-dimensional structure within which the plasticizer (c) is secured within the honeycomb and is not allowed to be released to the outside. The structure does not allow the plasticizer (c) to bleed over the surface of the hardened object to induce tackiness even when the plasticizer is contained at a relatively high ratio. If the phase separation micro dispersion structure is not adopted, the plasticizer is dissolved into the hardened resin, and once it reaches the saturation level, the plasticizer becomes bled over the surface of the hardened object to result in tackiness. If the extent of bleeding is significant, the surface becomes sticky. The phase separation micro dispersion structure can be observed through an electron microscope. The formation of the phase separation micro dispersion structure needs to be aided by rapidly hardening the resin within a working life of 5 minutes or less. Preferably, the working life should be set to 3 minutes or less, and even more desirably to 1 to 2 minutes. If the working life is set to 5 minutes or more, the process of phase separation micro dispersion cannot be completed with ease, and since it will take a day or more to disengage the model during the model production, the model production will become an extremely slow process.

When the plasticizer (c) is contained in the two-pack reaction hardening type urethane resin solution (A), it needs to be uniformly dissolved in the liquid resin, whereas the phase separation micro dispersion of the plasticizer from the cured resin is promoted during the reactive hardening stage, and the micro dispersed plasticizer is trapped to prevent from bleeding to the surface at the time when the reactive hardening is completed. The composition is constituted on thus delicate balance. Namely, the composition must be designed within the range that balance between hydrophilic and hydrophobic properties of the plasticizer (H) and the reaction curing resin is adjusted well. An alkylene oxide chain is available as a hydrophilic segment, and a hydrocarbon chain is available as a hydrophobic segment. The properties of the hydrophilic segment and the hydrophobic segment are determined by selecting a specific type of raw monomer. A certain degree of dissociation should be assured with regard to the balance between the hydrophilic property and the hydrophobic property. If the two-pack reaction hardening type urethane resin solution (A) contains a large number of ethylene oxide chains, the hydrophilic property becomes more pronounced, whereas if the ethylene oxide chains are replaced with propylene oxide chains, the level of hydrophilic property is weakened rather than the case of using the ethylene oxide chains. If ethylene oxide chains or propylene oxide chains are used in a smaller quantity, the hydrophobic property of the two-pack reaction hardening type urethane resin solution (A) becomes more pronounced. Thus, the hydrophilic property and the hydrophobic property can be adjusted within a certain range. In addition, by adjusting the type and quantity of the plasticizer (H), the hydrophilic property and the hydrophobic property of the plasticizer itself can be adjusted within a certain range. For instance, if a terminal of the plasticizer is constituted with alkyl ether, the level of the hydrophobic property increases as it changes to methyl ether, ethyl ether, butyl ether, phenyl ether in turn. Thus, the range over which the phase separation micro dispersion is achieved is set by changing loading and a chemical structure of the plasticizer (c) and/or loading and chemical structure of the two-pack reaction hardening type urethane resin solution (A). The desirable phase separation micro dispersion can be achieved by setting the hydrophobic property of the plasticizer (c) to a relative high level, and setting the hydrophilic property of the resin component to a relative high level through the method described above.

Next, the wax component (d) used in the present invention is explained. The wax component (d) is an inactive chemical compound having no functional groups that induce a chemical reaction, with volatility the extent of which is insignificant enough to be disregarded. It is a solid substance manifesting crystallization at room temperature. The wax component (d) may be a natural wax that is found in the natural world or a synthetic wax obtained through synthesis. The natural wax is most commonly found in candles. The chemical composition of the natural wax is referred to as wax ester which is constituted with higher fatty acid and higher alcohol. The number of carbons in the higher fatty acid · higher alcohol is 16 or higher in most instances. Since it is an ester compound, it has a small residual acid value. In other words, it contains residual free fatty acids. In addition, since numerous types of saturated and unsaturated higher fatty acids exist in the natural environment, certain types of wax contain unsaturated higher fatty acids or hydroxyl acid as well. These waxes have chemical structures close to that of paraffin and are crystallized or uncrystallized solid substances at room temperature. Their melting points are normally approximately 80°C. Typical examples of waxes include candela wax, carnauba wax, rice wax, bees wax, whale wax, montan wax, lanolin wax, alpha wax, cork fiber wax, sugarcane wax, wood wax, sumac wax, micro crystalline wax, and earth wax. Examples of synthetic waxes include polyethylene wax, wax obtained through Fischer-Ttopsch synthesis, a waxy copolymer and an ester constituted with such waxy copolymers, wax obtained by adding hydrogen as a catalyst to C₈-C₃₂ animal/vegetable oil or edible oil having straight or branched fat chains, silicon wax and fluorine containing wax. One of these wax substances may be used by itself, a plurality of the wax substances may be used in combination or a wax component containing a third constituent may be used. Such a wax component (d) manifests a pronounced paraffin or olefinic property, has a high level of hydrophobic property and is in a solid state at room temperature. Thus, it does not readily become dissolved into the multifunctional polyol component (a), the multifunctional polyisocyanate component (b) or the plasticizer (c). For this reason, it does not readily become dissolved when mixed in the two-pack reaction hardening type urethane resin solution (A) and mostly remains suspended in the liquid. As the two-pack reaction hardening type urethane resin solution (A) becomes rapidly set in this state, the wax becomes enclosed in a solid state within the resin achieving the three-dimensional network structure. Thus, the resin model according to the present invention has an advantage in that since the wax component is not directly exposed at the surface thereof, none of the problems of the conventional wax model arise. The wax component (d) is highly effective in accelerating the flow out of "the resin constituents which have become softened, thermally decomposed and melted as heat" is applied during the dewaxing / burning processes.

The wax component (d) is added so as to achieve a ratio of 1 to 20 wt% relative to the two-pack reaction hardening type urethane resin solution (A). If the wax content is equal to or less than 1 wt%, the desired effect of using the wax component (d) does not manifest during the dewaxing process. If the wax content is equal to or greater than 20 wt%, on the other hand, the fluidity of the two-pack reaction hardening type urethane resin solution (A) becomes poor and the operability of the resin model production is compromised. In addition, the strength of the resin model itself becomes lowered and the likelihood of the resin model becoming cracked or broken during disengaging becomes high. Accordingly, the wax content should be set to a range of 5 to 20wt% and more desirably to a range of 10 to 15 wt%.

The wax component (d) is used in the form of grains, flakes or lumps in a size small enough to be contained within a 1cm³ cube. Such wax grains or lumps may assume a roughly spherical shape, a roughly cubic shape or an irregular shape. In other words, the shape is not limited to true spheres or cubes. Their size should be small enough to be contained in a 1cm³ cube. Their diameter should be, preferably, 1mm or less. These wax particles naturally do not flow into any portion of the model with a wall thickness of 1mm or less. While this prevents uniform distribution of the wax component (d) in the model, it does not pose a problem as long as the casting mold can be manufactured and a high precision cast product is produced by assuring high levels of model shape retention and dimensional accuracy, smooth thermal decomposition, fusion and flow out and a minimum quantity of residual ash resulting from high temperature decomposition. The wax component (d) is allowed to flow into portions of the model with wall thicknesses equal to or greater than 1mm. Since unhardened liquid resin, too, is naturally allowed to flow into these portions with ease, a model with a resin component distributed evenly throughout its entirety can be disengaged from the mold. In a sense, the wax component (d) flowing into the portions of the model with large wall thicknesses in great quantities is advantageous. Namely, when the model is being dewaxed and baked, the melting · flow out · decomposition · burning process tends to be slowed down in thick portions. The presence of the wax component (d) in relatively large quantities fixed by the cured resin in these portions and ensures smooth melting, flowing-out, decomposition and burning during the dewaxing and burning processes.

The water component (e) is constituted of H₂O. The water component (e) includes; 1) the water blended in on purpose, 2) small quantities of water that become mixed into the raw chemical materials during normal manufacturing steps and 3) water in the air absorbed into the raw materials. The water component (e) according to the present invention includes them. Carbon dioxide gas generated through the chemical reaction between the water component (e) and the multifunctional polyisocyanate is used as a foaming agent. In other words, the water component is used to foam urethane with the water. Thus, a model constituted with resin foam containing the plasticizer (c), the wax component (d) and air bubbles is achieved. Such a resin model constituted of foam achieved within a specific controlled foam formation range retains a firm shape and is highly effective during the dewaxing · burning processes in which it is heated, becomes melted and decomposed, flows out and becomes burnt.

The main factor that determines the expansion ratio is the quantity of the water component (e), and sub factors such as the presence/absence of water at the die surface and the temperature and the humidity of the surrounding air also affect the expansion ratio. The water component (e) is included at a ratio of 0.01 to 1.0 wt% relative to the two-pack reaction hardening type urethane resin solution (A). It is desirable to set the water content to 0.03 to 0.5 wt%, and is even more desirable to set it to 0.08 to 0.15 wt%. If the ratio of the water component (e) is equal to or greater than 1.0 wt%, air bubbles tend to concentrate at the resin surface in a large quantity, which reduces the thickness of the skin layer at the model surface. Such a thin skin layer tends to become broken readily during the disengaging process, to allow air bubble cavities to be exposed at the model surface, which leaves the model surface in an irregular undesirable state. In other words, the foaming level must be controlled to a very low level. A foam regulator is used when a foaming urethane in order to regulate the size of the bubbles. According to the present invention, too, a foam regulator is added so as to regulate the size of the bubbles.

The water content (e) is normally blended in the multifunctional polyol component (a). The quantity of the water component added and then blended evenly into the multifunctional polyol component (a) is controlled by implementing metering for trace amounts of water through the Karl Fischer method. The water component blended in the multifunctional polyol component (a) may be pure water or it may be a substance containing water as long as it does not adversely affect the processes of model production. For instance, the water component may be provided as a surface active agent aqueous solution, a dye aqueous solution, a water-based glue, a resin aqueous solution, water latex, fine natural high molecular particles containing water or the like.

The surface active agent aqueous solution is liquid detergent aqueous solution, solid soap, powdered soap or the like, and it is sold in market as shampoo, kitchen detergent, industrial detergent or toilet soap. The solid soap or the powdered soap does not contain much moisture content, but contains little moisture content. The dye aqueous solution is solution in which dye is dissolved in the water. The water-based glue is aqueous solution of methyl cellulose or glue made by dissolving rice into the water, and they are sold in a stationery store. The water latex is vinyl acetate latex or synthetic rubber latex, it is sold as a bond for wood working in a paint store or a shop for do-it-yourself widely. The fine natural high molecular particles may be fine particles of paper, wood or fabric. Examples of fine paper particles include fine particles of newspaper, advertising fliers, copying paper, wrapping paper and corrugated cardboard. Examples of fine wood particles include fine particles of building lumber waste, civil engineering lumber waste, furniture wood waste, wood fabrication leavings, scrub plant waste and sawdust. Examples of fine fabric particles include fine particles of cotton cloth, linen cloth and wool cloth.

Because the fine natural high molecular particles are generally hydrophilic, it contains moisture content much or little. Therefore, when the fine natural high molecular particles are mixed and distributed in the multifunctional polyol component (a), the moisture content contained in the fine natural high molecular particles are brought into the system, so that the moisture content of the multifunctional polyol component (a) is increased. Accordingly, the moisture content of the multifunctional polyol component (a) can be controlled by taking moisture quantity brought by mixture quantity of the natural high molecular particles into account.

In the case of being foamed by applying this moisture containing material, a foam stabilizer is used in order to make the size of foam even possibly. The foam stabilizer is a kind of the surface active agent, and a material formed by applying alkylene oxide with silicon is general. By performing water foam by applying the foam stabilizer, foam in which bubbles with relatively similar size are dotted evenly in the model is formed. Though the strength of the model is decreased, the dewax component and the burning component are decreased in the dewaxing process and the burning process, so that large significance is appeared. The strength of the model is not severe, but it is better that the strength as much as the demolding can be performed smoothly is appeared. It is better that the model after demolding has strength such that the model can be carried. It is better that shape change is least in keeping at normal temperature. It is better than the model can maintain strength such that it can be endured to a coating operation at a fireproof coating. Accordingly, because the present invention does not require high strength of the model, the strength of the model according to the present invention including the plasticizer or the wax component is sufficient.

It is preferred that organic solvent is used in the present invention. An inactive organic solvent which does not chemically react with isocyanate is selected as the organic solvent. Examples of the inactive organic solvent include an aromatic organic solvent, an ester organic solvent, an ether organic solvent, an aliphatic organic solvent, and a chlorine-based organic solvent, etc. The requirements that the organic solvent must satisfy are that: it dissolves the multifunctional polyol (a), the multifunctional polyisocyanate (b) and the plasticizer (c), it has a mild odor, it does not generate any toxic gas when it is burned, and it is economical. The organic solvent satisfying such requirements should be preferably an aromatic organic solvent such as toluene or xylene.

The organic solvent is easy to vaporize and has an effect such as to assist the function of the foaming agent at a stage in heating and gelling of the two-pack reaction hardening type urethane resin solution (A). Besides, the organic solvent is in a condition so as to be trapped in the demolded model. In addition, the organic solvent remains inside the thick portions of the model which is more than 1 mm and difficult to burn, so that an effect that it assists burning at the dewaxing and the sintering processes. It also achieves a great advantage in that it lowers viscosity of the resin to improve operability of the model production.

A balancing agent, a stabilizer, a coloring agent, flammable filler and a diluent are added into the two-pack reaction hardening type urethane resin solution (A). A hindered phenol oxidation inhibitor or a hindered amine oxidation inhibitor is used as the stabilizer. An organic dye or powdered carbon is an effective coloring agent. A pigment that becomes residual ash through the baking process is not desirable. In addition, no flame retardant should be added. The flammable filler should contain 1 to 10% microballoons or carbon powder. Resin microballoons are fine lightweight particles with a true specific gravity of 0.15 to 0 .50 g/cc and a particle diameter within the range of 15 to 100 µm, and are available as commercial products such as UCAR Phenolic Microballoons (manufactured by Union Carbide) and Matsumoto Microsphere (manufactured by Matsumoto Yushi Pharmaceuticals Co. Ltd.). By using flammable filler containing resin microballoons, air is embedded into the resin model, which promotes the decomposition, flow out and burn off during the dewaxing and baking processes and reduces the quantity of residual ash. The content of the resin microballoons should be within a range of 0.1 to 10 wt% relative to the weight of the resin model. If the resin microballoons are contained at 10 wt% or higher, the two-pack reaction hardening type urethane resin solution (A) becomes grainy and smooth fluidity cannot be achieved. For this reason, the resin microballoons content should be 3 to 8 wt%.

On the other hand, if the hardened resin is extremely hard, the melting, decomposition, flowing-out and burning are delayed at heating for the resin model to be damaged due to breaking of the casting mold by expansion of the resin itself. Accordingly, it is necessary to soften the whole hardened resin model fast and to disperse expanding stress of the resin to the gate and the air bleeder. For this reason, it is found that hardness at 80 °C of the vanishing resin model which is a cured matter is available within 20 - 55 in Shore D hardness scale, preferably within 30-50. If the hardness at 80 °C is more than 55 in Shore D hardness scale, moderation of the expansion stress in the resin model becomes worse and the stress cannot be dispersed to the gate and the air bleeder, so that the casting mold is broken by expanding the resin model. If the hardness at 80 °C is less than 20 in Shore D hardness scale, the hardness of the resin model at summer temperature becomes less than 40 in Shore D hardness, shortage of the hardness is caused in the demolding process at the resin model production, so that the resin model is deformed by the forced demolding stress.

Thus, setting of the resin composition for the vanishing model is related mutually with a quantity of the resin and a framework, a speed of hardening, a melting / flowing-out / burning component of the plasticizer component and the wax component, hardness of the cured matter, foaming control, etc., so that balanced availably applicable range are found, resulting that the present invention is achieved.

It is an important element that the resin model which is formed with the two-pack reaction hardening type urethane resin solution (A) designed as described above is formed to a shape easy to be burn off. As a result of considering various kinds of rotation molds possible to form a thick portion to hollow shape, it is found that a hollow resin model can be formed due to a model's shape and/or in rotation casting conditions and it is adapted to the lost wax precious casting, so that the precious molding can be produced without breaking or cracking the mold at the dewaxing and burning process.

An embodiment of the two-pack reaction hardening type urethane resin solution (A) is as follows.

32.0 wt. units of crude MDI (NCO = 32%), 5.0 wt. units of 2-ethyl hexyl adipate to be used as a plasticizer and 8.0 wt. units of xylene were placed in a three-neck flask. Then, 3.0 wt. units of the wax component were added into the mixture and blended through agitation. The ratio of NCO was 20.5%. This mixture was used as the multifunctional polyisocyanate component (1). Next, 7.0 wt. units of ethylene diamine · propylene oxide adduct (MW = 300), 8.0 wt. units of ethylene diamine propylene oxide adduct (MW = 400), 16.0 wt. units of trimethylol propane · propylene oxide adduct (MW = 400) and 5.0 wt. units of 2-ethyl hexyl adipate to be used as a plasticizer were placed in a four-neck flask, and the mixture was thoroughly blended and then dehydrated by agitating the mixture for one hour at 100°C in a vacuum while allowing nitrogen gas to be absorbed therein through capillaries. The water content in the mixture was measured to be 0.02% through the Karl Fischer method. Next, 9.0 wt. units of xylene was added blended in and diluted, 0.01 wt. units of the foaming agent and a very small quantity of octylic zinc/xylene solution (10% solution) were added into the mixture to adjust its working life to 90 seconds. Furthermore, 1.0 wt. units of shredder cutting newspaper small pieces (adjustable articles: a size of about 0.5cm × about 1 cm, moisture content is 10 %) as natural high molecular waste particles, 0.01 wt. units of the foaming agent and 5.0 wt. units of the wax component were added to it. This mixture was used as the multifunctional polyol component (1).

The blending ratio of the multifunctional polyol component and the multifunctional polyisocyanate component was 1: 1 (by weight). The NCO/OH ratio was calculated to be 0.83, the plasticizer content was calculated to be 10.0 wt.% the polyether chain content was calculated to be 21.0 wt.% the wax component content was calculated to be 8.0 wt.%, the average functional radix of the multifunctional polyol component was calculated to be 3.32 and the average functional radix of the multifunctional polyisocyanate component was calculated to be 2.30.

Property values of the two-pack reaction hardening type urethane resin solution (A) comprising 1: 1 (by weight) of the blending ratio of the multifunctional polyol component (1) and the multifunctional polyisocyanate component (1) are follows.

They are working life = 90 seconds, blending viscosity = 12 mPas and demolding possible time = 20 minutes, and outside appearance of hardening object is light yellow brown collar and little foamed.

### INDUSTRIAL APPLICABILITY

Recently, requirement levels to accuracy of precision molding parts and to complicated shapes have become increase. A demand for titan precision molding products whose melting metals are titan alloys is increased rapidly in specific industrial fields because they make use of superior characteristics in weight saving, high strength, high heat resistance and high corrosion resistance. Furthermore, special parts in an automobile parts field, a jet engine parts field, a nuclear energy parts field, a heat exchanging parts field, and space exploitation rocket parts field are designed so as to be able to achieve complicated shapes and high dimensional accuracies, and further higher levels of an engineering development than prior arts are required.

Even if the high level of parts' design is developed, if precision parts faithful to the designs thereof can not be produced, there is no sense. It is important to increase precision molding technology with complicated shapes and high dimensional accuracy. One of key techniques for the lost wax precision molding is a model after all. It is difficult technologically for the lost wax precision molding using the prior wax models to correspond to the high requirements. Namely, it is limited technologically by itself to produce complicated and high accuracy model with a wax component which is fragile.

Therefore, according to the present invention, since the model used in the precious casting is formed with resin and the resin model has a hollow part, burning-off performance in the model for precious casting can be increased, and further since the rotation casting is used, the resin model with a hollow part is formed in an easy process, so that the precious moldings with complex shapes and high accuracy required in the market can be manufactured. Concretely, the precious molding having a thin portion with thickness of not more than 1 mm, a thick portion with thickness of about 10 mm, a portion with a sharp edge and a complicated shape with three-dimensional curved surface such as to intertwine them one another can be manufactured.

By making the technology according to the present invention practicable, it is ensured that the present invention can contribute to development of an automotive industry, an aircraft industry, or an industry for space exploitation.

## Claims

1. A process for producing a resin model used in precious casting by a lost wax method comprising at least:
a hardened resin layer forming step of injecting two-pack reaction hardening type urethane resin solution (A) with a working life of 1 to 3 minutes through a casting port of a mold for resin model formation defining an internal space whose configuration is identical with that of a product into said internal space in a volume amounting to 5% to 20% of said volume of said internal space, closing said casting port and rotating said mold for resin model formation, so that a hardened layer of said two-pack reaction hardening type urethane resin solution is formed on an inside wall of said mold for resin model formation;
a resin model forming step of repeating said hardened resin layer forming step three to six times at intervals of 3 to 5 minutes so as to effect laminating of hardened resin layers, thereby obtaining a resin model having internal space at a core region thereof; and demolding step of demolding said resin model from said mold for resin model formation.

2. A process for producing a resin model according to claim 1, wherein:
said two-pack reaction hardening type urethane resin solution (A) comprises multifunctional polyol component (a), multifunctional polyisocyanate component (b) and a plasticizer component (c), and an average functional group of said multifunctional polyol component (a) is 2.8 or larger, an average functional group of said multifunctional polyisocyanate component (b) is 2.0 or larger, and a ratio NCO/OH is within 0.7 to 1.0, and further said plasticizer component (c) is preferably micro-dispersed through phase separation at said reaction hardening.

3. A process for producing a resin model according to claim 1 or 2, wherein said two-pack reaction hardening type urethane resin solution (A) contains polyether chains having a chemical structure indicated in chemical structural formula as follows at 2- 25 wt% thereof:

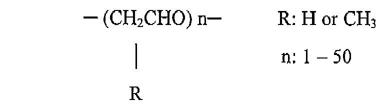

4. A process for producing a resin model according to any one of claims 1 to 3, wherein:
a fine wax component (d) is preferably contained within 5 to 40 wt% in said two-pack reaction hardening type urethane resin solution (A).

5. A process for producing a resin model according to any one of claims 1 to 4, wherein:
said resin model has an internal hollow space whose volume is in a range from 20% to 70% of volume of said resin model.

6. A process for producing a resin model according to claim 5, wherein said internal hollow space is filled with said wax component (d).

7. A process for producing a resin model according to claim 5, wherein said internal hollow space is filled with foamed urethane.

8. A process for lost wax precious casting wherein said resin model according to any one of claims 1 to 7 is used.
